# FASCICULE DE BREVET EUROPEEN

(11) **EP 2 795 073 B1**
(45) Date de publication et mention de la délivrance du brevet: **09.03.2016**
(21) Numéro de dépôt: 12820928.5
(22) Date de dépôt: 18.12.2012
(51) Int. Cl.: F01K 17/02, F01K 7/38, F01K 9/00, F01K 7/34

(54) **PROCÉDÉ ET INSTALLATION DE COGÉNÉRATION**
VERFAHREN UND KRAFT-WÄRME-KOPPLUNSANLAGE MIT THERMOKONPRESSION
METHOD AN COGENERATION PLANT WITH THERMOCOMPRESSION

(30) Priorité: 19.12.2011 FR 1161897
(43) Date de publication de la demande: 29.10.2014
(73) Titulaire: Suez Environnement, 92040 Paris La Defense Cedex (FR)
(72) Inventeur: DUONG, Frédéric, F-66370 Pezilla-la-Riviere (FR)
(74) Mandataire: Cabinet Armengaud Aîné
(86) Numéro de dépôt international: PCT/IB2012/057419
(87) Numéro de publication internationale: WO 2013/093770

(56) Documents cités:
- DE-A1- 10 052 766
- DE-A1- 19 535 318
- JP-A- 61 126 309

## Description

L'invention concerne un procédé de cogénération selon lequel une source chaude produit de la vapeur qui est détendue dans au moins une turbine à condensation dont la sortie de vapeur à très basse pression est reliée à un condenseur.

La cogénération consiste à produire simultanément de l'électricité et de la chaleur à partir d'une turbine à vapeur, d'une turbine à gaz ou d'un moteur thermique. L'électricité est produite par un générateur entraîné en rotation par la turbine.

La vapeur à basse pression sortant à l'échappement de la turbine contient encore de l'énergie latente, mais à des niveaux de température et de pression relativement bas qui ne permettent pas une utilisation efficace d'une partie de cette énergie pour des usages de chauffage habituels.

L'invention concerne plus particulièrement un procédé de cogénération dont la source chaude consiste en une chaudière équipée d'un foyer dans laquelle sont incinérés des déchets ou tous combustibles d'origine biomasse ou fossile (charbon, fuel, gaz), l'énergie ainsi produite par la combustion des déchets étant désignée par le sigle EfW (énergie produite à partir de déchets ; *Energy from Waste*).

Le document JP 61 126309 concerne un procédé de production électrique du genre selon lequel une source chaude produit de la vapeur d'eau qui est détendue dans au moins une turbine dont la sortie de vapeur à basse pression est reliée à un condenseur, une fraction au moins de la vapeur basse pression sortant de la turbine est dirigée vers un thermo-compresseur à venturi dans lequel de la vapeur d'eau, prélevée sur un étage intermédiaire de la turbine, à pression et température plus élevées que celles de la vapeur basse pression est injectée au voisinage du col du venturi pour donner un fluide résultant dont la pression et la température sont supérieures à celles de la vapeur basse pression sortant de la turbine, ce fluide résultant étant dirigé vers un second condenseur. Ce condenseur assure le préchauffage des condensats provenant du premier condenseur, à l'intérieur du cycle thermodynamique de la turbine. La quantité de chaleur récupérée est faible car la température de la vapeur recomprimée, constituant le fluide chaud, est proche de celle des condensats sortant du premier condenseur.

L'invention a pour but, surtout, de fournir un procédé de cogénération qui permet de mieux valoriser l'énergie contenue dans la vapeur à basse pression sortant de la turbine, sans entraîner des dépenses d'investissement et d'exploitation rédhibitoires sur le plan économique.

Selon l'invention, un procédé du genre défini précédemment, pour une cogénération, est caractérisé en ce que le second condenseur est traversé par un fluide auxiliaire d'un circuit externe au cycle thermodynamique de la turbine, et que tout ou partie de la chaleur latente de condensation de la vapeur, à l'échappement de la turbine, est transféré au circuit externe.

Le fluide auxiliaire est un fluide externe au cycle thermodynamique et permet une utilisation de la chaleur externe, notamment pour un réseau de chaleur urbain, un séchage de boues ou autre biomasse, ou un usage interne pour le préchauffage de l'air de combustion. La quantité de chaleur exportée selon l'invention peut atteindre 50% de la chaleur du combustible de la chaudière car, selon les besoins, la totalité de la vapeur sous vide en sortie de la turbine peut être récupérée et valorisée, tandis que le débit de vapeur alimentant le premier condenseur peut devenir quasi nul.

L'invention se distingue complètement d'éjecteurs de vide connus par la combinaison de la thermo-compression avec une cogénération utilisant la chaleur latente disponible à l'échappement d'une turbine vapeur.

Le fluide auxiliaire peut être constitué par de l'eau de chauffage de bâtiments ou de serres maraîchères.

Avantageusement, la vapeur d'eau prélevée sur l'étage intermédiaire de la turbine et injectée dans le thermo-compresseur est à une pression voisine de 5 bars. Plus généralement, la vapeur d'eau moyenne pression prélevée sur l'étage intermédiaire de la turbine est à une pression adaptée selon le taux de compression nécessaire.

La pression de vapeur d'eau en sortie de la turbine peut être comprise entre 100 et 240 mbar (température entre 46°C et 64°C) et celle à la sortie du thermo-compresseur peut être comprise entre 200 mbar et 500 mbar (température entre 60°C et 81°C).

L'invention est également relative à une installation de cogénération pour la mise en oeuvre d'un procédé tel que défini précédemment, comportant une source chaude produisant de la vapeur d'eau qui est détendue dans au moins une turbine dont la sortie est reliée à un condenseur, et comportant au moins un thermo-compresseur à venturi, des moyens pour diriger une fraction au moins de la vapeur à basse pression sortant de la turbine vers le thermo-compresseur, et des moyens pour injecter dans le thermo-compresseur de la vapeur à température et pression plus élevées que celles de la vapeur sortante, pour donner un fluide résultant dont la pression et la température sont supérieures à celles de la vapeur sortant de la turbine, et un second condenseur vers lequel ce fluide résultant est dirigé, l'installation étant caractérisée en ce qu'elle comprend un circuit externe pour un fluide auxiliaire, et le second condenseur est traversé par le fluide auxiliaire, pour que tout ou partie de la chaleur latente de condensation de la vapeur, à l'échappement de la turbine, soit transféré au circuit externe.

Le circuit externe, du fluide auxiliaire, peut être constitué par un réseau d'eau chaude à moyenne température, notamment pour le chauffage de bâtiments ou de serres maraîchères.

Avantageusement, l'installation comporte une dérivation sur la conduite de sortie de la turbine, le thermo-compresseur à venturi étant installé sur cette dérivation, en amont du premier condenseur.

L'installation peut comporter plusieurs dérivations en parallèle sur la conduite de sortie de la turbine, un thermo-compresseur à venturi étant installé sur chaque dérivation, en amont du premier condenseur.

L'installation peut comporter plusieurs thermo-compresseurs à venturi installés en série, les uns à la suite des autres.

L'installation peut comporter un séparateur de gouttelettes d'eau pour les éliminer de la vapeur avant entrée dans le thermo-compresseur.

La pression de sortie de la turbine peut être comprise entre 100 et 240 mbar (température entre 46°C et 64°C) et celle à la sortie du thermo-compresseur peut être comprise entre 200 mbar et 500 mbar (température entre 60°C et 81°C), la vapeur moyenne pression de la turbine étant d'environ 5 bars, mais pouvant être plus ou moins élevée selon le taux de recompression à obtenir.

Les moyens pour injecter dans le thermo-compresseur un fluide à température et pression plus élevées que celles de la vapeur sortante peuvent comprendre une conduite de prélèvement de vapeur moyenne pression sur un étage intermédiaire de la turbine.

Selon une variante, le thermo- compresseur à venturi est installé en série sur la conduite de sortie de la turbine, en aval du premier condenseur.

L'invention consiste, mises à part les dispositions exposées ci-dessus, en un certain nombre d'autres dispositions dont il sera plus explicitement question ci-après à propos d'exemples de réalisation décrits avec référence aux dessins annexés, mais qui ne sont nullement limitatifs. Sur ces dessins :
Fig. 1 est un schéma d'une installation de cogénération mettant en oeuvre le procédé de l'invention.
Fig. 2 est un schéma partiel d'une variante de réalisation de l'installation.
Fig. 3 est un schéma partiel d'une variante avec trois thermo-compresseurs en parallèle.
Fig. 4 est un schéma partiel d'une variante avec un thermo-compresseur.
Fig. 5 est un schéma partiel d'une variante avec deux thermo-compresseurs montés en série.
Fig. 6 est un schéma simplifié d'un dispositif à effet cyclone pour séparer les gouttelettes d'eau de la vapeur.
Fig. 7 est une coupe schématique du dispositif séparateur de Fig. 6.
Fig. 8 est un schéma en coupe verticale d'un autre dispositif de séparation des gouttelettes d'eau, et
Fig. 9 est un schéma d'une variante du dispositif de Fig. 8.

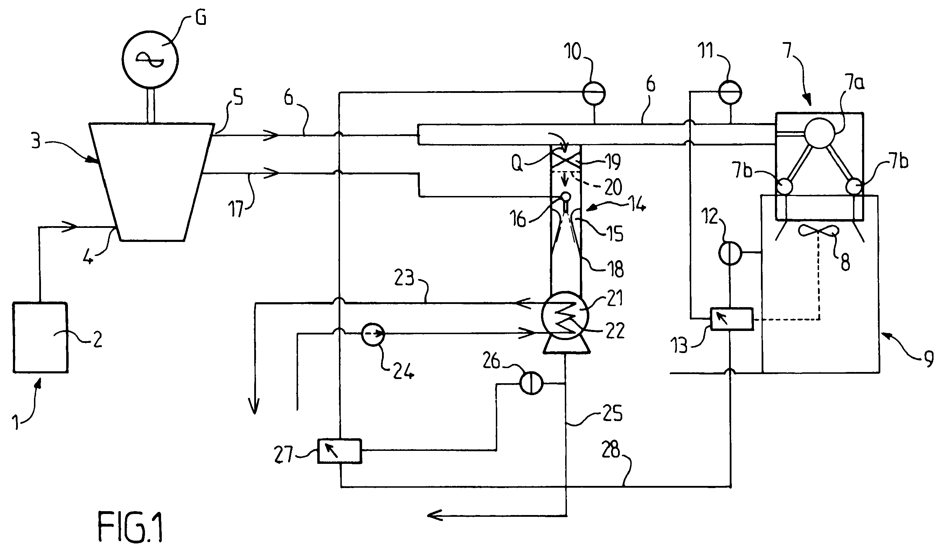

En se reportant à Fig. 1 des dessins, on peut voir une installation de cogénération comportant une source chaude 1 constituée par une chaudière 2 produisant de la vapeur d'eau surchauffée sous pression élevée, généralement supérieure à 20 bars. L'invention concerne plus particulièrement une installation de cogénération du type EfW selon laquelle des déchets urbains sont incinérés dans la chaudière 2 et permettent de récupérer de l'énergie à partir de déchets et de produire simultanément de l'électricité et de la chaleur (*Energy from Waste).*

La vapeur d'eau produite par la chaudière 2 est détendue dans au moins une turbine vapeur à condensation 3. La vapeur haute pression est admise à l'entrée 4 de la turbine. En sortie 5 de la turbine, la vapeur se trouve à très basse pression, notamment comprise entre 100 et 240 mbar absolu à une température de 46°C à 64°C et peut contenir jusqu'à 12 % en masse d'eau sous forme de micro gouttelettes. La sortie 5 est reliée par une conduite 6 à un condenseur 7 qui constitue la source "froide" du cycle thermodynamique fermé.

On rappelle qu'un condenseur de vapeur est un échangeur thermique utilisé pour condenser la vapeur d'eau en liquide. Au cours de la condensation de la vapeur d'eau, la chaleur latente de condensation est récupérée par un fluide de refroidissement du condenseur. Les condenseurs qui sont également des échangeurs de chaleur vapeur-eau sont largement utilisés dans le domaine du chauffage et des procédés de traitement.

La turbine 3 entraîne un générateur électrique G, généralement un alternateur, pour produire de l'énergie électrique. La vapeur sortant de la turbine 3, soit à la sortie basse pression 5, soit par un soutirage à pression intermédiaire, permet d'obtenir de l'énergie thermique.

Le condenseur 7 illustré sur Fig. 1 est un aérocondenseur qui utilise, comme fluide de refroidissement, l'air ambiant. L'air traverse des corps d'échange thermique ailettés, le flux d'air étant obtenu mécaniquement par un ou plusieurs ventilateurs 8. La vapeur d'eau arrive dans le corps principal 7a, également dénommé « plenum », du condenseur constitué par une conduite sensiblement horizontale dont le diamètre peut atteindre 2 m ou plus, qui est reliée par des conduites inclinées à des cylindres 7b de plus petit diamètre, sensiblement horizontaux, situés en partie inférieure et qui recueillent l'eau condensée. Ces condensats sont renvoyés vers la chaudière 2 par un système de tuyauteries sous pression 9.

Un capteur de température 10 et un capteur de pression 11 sont prévus sur la conduite 6. Un capteur de température 12 est prévu sur l'une des conduites du système 9. La pression et la température fournies respectivement par les capteurs 11 et 12 sont envoyées sur un régulateur 13 qui commande la vitesse de rotation du ventilateur 8 pour maintenir une pression optimale à l'échappement de la turbine.

Le condenseur au lieu d'être constitué par un aérocondenseur 7 pourrait être réalisé sous forme d'un hydrocondenseur qui utilise, comme fluide de refroidissement, l'eau ou une solution liquide, en remplacement de l'air utilisé dans l'aérocondenseur 7.

Des hydrocondenseurs sont utilisés dans les centrales thermiques électriques de forte puissance. Leur capacité d'échange thermique élevée nécessite, généralement, la proximité d'un cours d'eau à débit suffisant, et permet d'améliorer les performances du cycle thermodynamique. L'eau de refroidissement traverse un échangeur à surface tubulaire ou à plaque.

Une partie de la chaleur de la vapeur d'eau, dite chaleur "fatale", est dissipée au condenseur (aéro- ou hydrocondenseur). En effet, la vapeur sous vide à l'échappement de la turbine contient la majeure partie de la chaleur sous forme de chaleur latente du gaz, mais peut difficilement être utilisée pour des usages courants de chauffage du fait de sa température relativement basse, généralement comprise entre 40°C et 60°C.

L'invention vise à récupérer une partie de la chaleur "fatale" qui est dissipée au condenseur et de la valoriser en utilisant un minimum de vapeur motrice, ceci de manière à limiter l'impact sur la production électrique du turbogénérateur G.

L'invention s'applique ainsi à la récupération de la chaleur de condensation de la vapeur à basse température à la sortie ou échappement 5 de la turbine (pression inférieure à la pression atmosphérique).

Selon l'invention, une fraction Q (Fig.1) au moins de la vapeur sortant de la turbine est dirigée vers un thermo-compresseur 14 à venturi 15 présentant de manière classique un convergent et un col suivi d'un divergent.

Le thermo-compresseur 14 comporte un éjecteur 16 situé dans l'axe du venturi 15 en amont, au voisinage de l'entrée du convergent. Cet éjecteur 16 est alimenté en vapeur d'eau moyenne pression, avantageusement de l'ordre de 5 bars, prélevée sur un étage intermédiaire de la tuyère par une canalisation 17. L'injection de vapeur à moyenne ou haute pression dans le venturi 15 entraîne la formation d'une chambre d'aspiration au niveau du convergent, et de détente au niveau du divergent.

Selon la réalisation de Fig. 1, le thermo-compresseur 14 est disposé sur une conduite 18 de vapeur en dérivation de la conduite 6 qui relie l'échappement de la turbine au condenseur principal 7. Une vanne 19 peut être prévue pour commander la fermeture ou l'ouverture de la conduite 18. Selon le titre de la vapeur à recomprimer, un séparateur de gouttelettes d'eau, notamment sous forme d'une grille 20, est avantageusement disposé en aval de la vanne 19 et en amont de l'éjecteur 16.

La vapeur basse pression provenant de la conduite 6 est soumise à une compression, dans le thermo-compresseur 14, sous l'effet de la vapeur moyenne pression injectée dans le venturi 15. La compression de la vapeur provenant de la conduite 6 entraîne une augmentation de la pression et de la température de cette vapeur. Le mélange entre les deux vapeurs s'effectue en aval du venturi 15 dans la conduite 18 fermée.

On obtient ainsi, en aval du thermo-compresseur, une vapeur d'eau dont la pression de saturation est supérieure à celle que l'on récupère de la conduite 6. A titre d'exemple, une vapeur dont la pression en amont est de 100 à 240 mbar peut être portée, en aval, à une pression de 200 mbar à 500 mbar pour une température de 60°C à 81 °C au lieu de 46°C à 64°C, et cela avec injection d'une vapeur moyenne pression à 5 bars.

L'augmentation de pression est d'environ 100 mbar à 260 mbar et l'augmentation de température de 15°C à 17°C, l'enthalpie augmentant de 300 kJ/kg ou plus.

La conduite 18 est reliée à un second condenseur 21, de préférence un hydrocondenseur dans lequel est logé un serpentin 22 traversé par un fluide auxiliaire, constitué notamment par de l'eau de chauffage de bâtiments ou de serres maraîchères, circulant dans un ensemble de conduites formant un circuit 23 externe au cycle thermodynamique. Le fluide auxiliaire externe est mis en mouvement par une pompe 24. Le fluide auxiliaire est indépendant du fluide du cycle thermodynamique.

La vapeur d'eau condensée du deuxième condenseur 21 est reprise par une conduite 25 et renvoyée à la chaudière 2. Un capteur de température 26 est installé sur la conduite 25 et transmet la valeur de température mesurée à un régulateur 27 auquel est également fournie la température détectée par le capteur 10. Le régulateur 27 fournit sur une sortie un signal transmis par une ligne 28 au régulateur 13.

Le thermo-compresseur 14 permet de rehausser les conditions de pression et de température de la vapeur provenant de la sortie basse pression de la turbine à un niveau compatible avec une utilisation. La chaleur de la vapeur comprimée par thermo-compression est ensuite récupérée par l'échangeur-condenseur 21 qui permet d'alimenter le circuit 23 notamment formé par un réseau 23 d'eau chaude à moyenne température.

La thermo-compression contribue à augmenter significativement la capacité thermique d'une cogénération sur une turbine à condensation en additionnant la chaleur de la vapeur en sortie de la turbine avec celle du soutirage qui alimente le thermo-compresseur 14.

Dans le montage en parallèle du thermo-compresseur 14 selon Fig. 1, le thermo-compresseur est positionné sur un circuit formé par la conduite 18 distincte de la conduite d'échappement 6 de la turbine mais reliée à celle-ci. Le condenseur 21, qui forme un échangeur de récupération de chaleur, fonctionne à une pression et à une température supérieures à celles du condenseur primaire 7, ou premier condenseur, auquel est reliée la conduite 9, ce qui permet une utilisation efficace de chaleur par le circuit externe 23 de fluide auxiliaire.

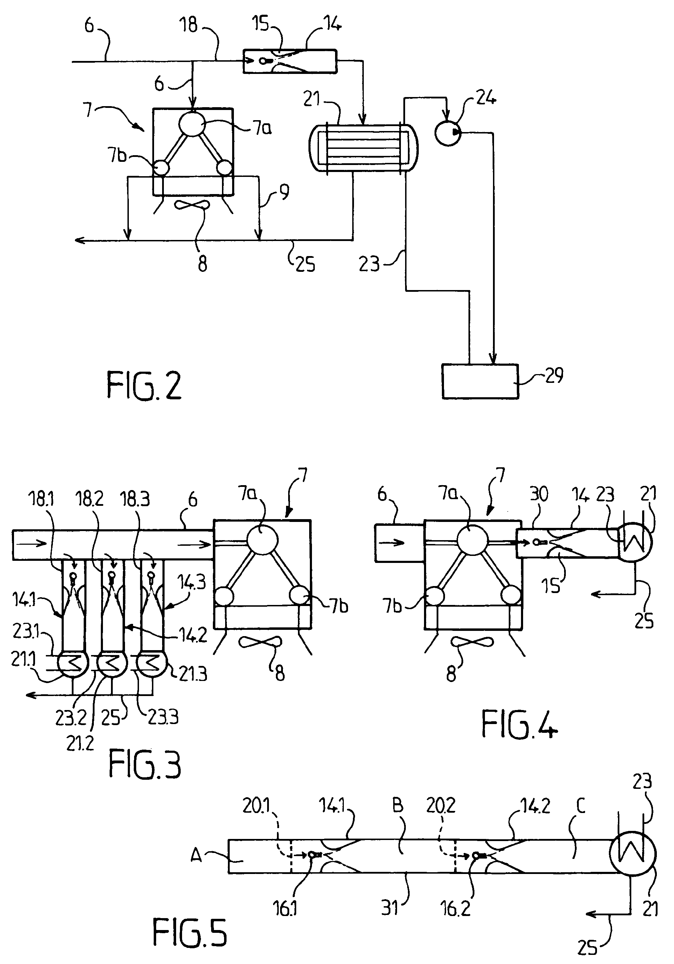

Fig. 2 est un schéma d'une installation semblable à celle de Fig. 1 dont les différents éléments sont désignés par les mêmes références numériques. Le fluide auxiliaire chauffé dans l'échangeur du condenseur 21 est utilisé pour le chauffage d'une serre 29 ou, en variante, pour un réseau de chauffage industriel.

Fig. 3 illustre une installation comportant plusieurs thermo-compresseurs, trois dans l'exemple représenté respectivement 14.1, 14.2, 14.3; installés sur des conduites de dérivation parallèles 18.1, 18.2, 18.3. A chaque conduite et thermo-compresseur est associé un condenseur respectivement 21.1, 21.2, 21.3, et un circuit de fluide auxiliaire distinct 23.1, 23.2, 23.3. L'eau condensée de chaque condenseur est recueillie dans une même conduite 25 pour être renvoyée à la chaudière. Comme dans le cas de Fig. 1 et Fig. 2, les conduites 18.1, 18.2, 18.3 sont branchées en dérivation sur la conduite 6 d'échappement de la turbine entre la sortie de la turbine et le condenseur 7.

Les thermo-compresseurs 14.1, 14.2, 14.3 disposés en parallèle peuvent fonctionner avec des débits et des températures différentes selon les besoins de chaque utilisateur branché sur le circuit correspondant 23.1, 23.2, 23.3. L'installation présente ainsi une grande souplesse de fonctionnement.

Fig. 4 illustre une variante de réalisation selon laquelle le thermo-compresseur 14 est inséré dans une conduite de vide 30 située en sortie de l'aérocondenseur 7. La conduite 30 est reliée au plénum 7a de l'aérocondenseur et se situe en aval de la conduite 6.

Les éléments de l'installation de Fig. 4 identiques ou semblables à des éléments déjà décrits à propos de Fig. 1 sont désignés par les mêmes références sans que leur description soit reprise.

La disposition du thermo-compresseur 14 selon Fig. 4 peut être qualifiée de montage en série du thermo-compresseur en aval de l'aérocondenseur sur la conduite de vide, mais en fait cela équivaut à un fonctionnement parallèle.

Fig. 5 illustre une disposition en série de deux thermo-compresseurs 14.1, 14.2 sur une conduite sous vide 31 commune qui aboutit au second condenseur 21. Les éjecteurs respectifs 16.1, 16.2 sont alimentés en vapeur moyenne pression, cette pression pouvant être la même ou pouvant être différente pour chaque éjecteur. Pour recomprimer une vapeur fortement chargée en micro gouttelettes d'eau, un séparateur de gouttelettes 20.1, 20.2 est avantageusement prévu en amont de chaque thermo-compresseur. De préférence, la pression motrice de la vapeur moyenne pression de l'éjecteur 16.2 le plus en aval est supérieure à celle de la vapeur moyenne pression de l'éjecteur 16.1 en amont.

La pression et la température de la vapeur comprimée, dans la zone C située en aval du thermo-compresseur 14.2 et en amont du condenseur 21, sont supérieures à la pression et à la température de la vapeur dans la zone B comprise entre les deux thermo-compresseurs 14.1, 14.2. La pression et la température de vapeur dans la zone B sont elles-mêmes supérieures à la pression et à la vapeur dans la zone A située en amont du premier thermo-compresseur 14.1.

Cette disposition en série de plusieurs thermo-compresseurs permet d'augmenter graduellement la pression et la température de la vapeur.

Compte tenu de la vitesse des gaz très élevée (supersonique) dans la tuyère formée par le venturi 15, il convient de protéger les surfaces du venturi et du diffuseur contre le risque d'érosion due à des particules liquides contenues dans la vapeur. Le titre en eau, sous forme de gouttelettes, de la vapeur à la sortie d'une turbine à condensation peut être de l'ordre de 5 à 15 % en masse.

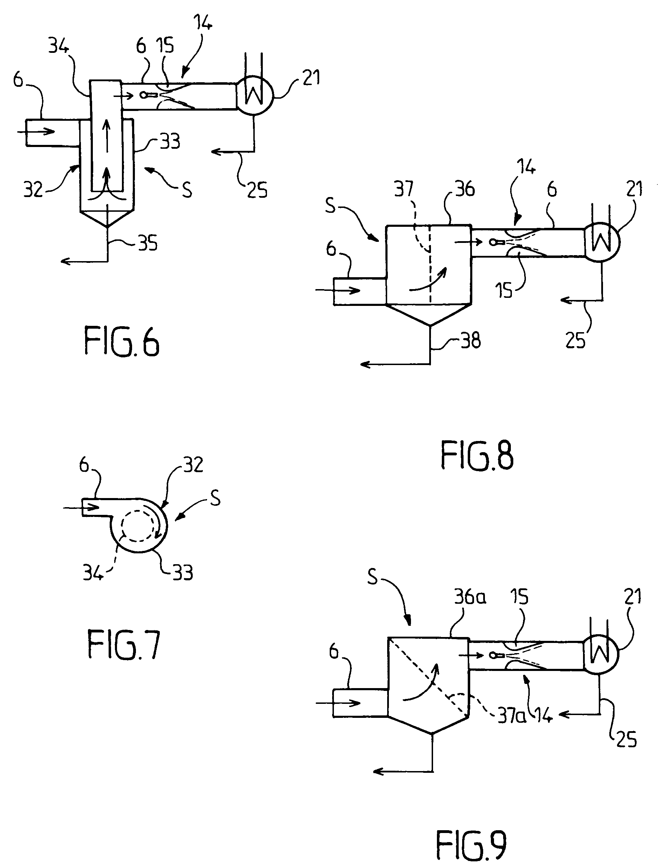

Le venturi 15 formant tuyère peut être réalisé en matériaux très résistants, notamment acier inoxydable, stéllité ou autre traitement de surface anti-érosion. Il est également possible comme illustré sur Fig. 6 à Fig. 9 d'insérer, en amont du venturi 15, un séparateur S de particules liquides.

Selon la réalisation de Fig. 6 et 7, le séparateur S de particules liquides est réalisé sous forme d'un séparateur à effet centrifuge 32 du type cyclone. La conduite 6 de sortie de la turbine débouche tangentiellement (Fig. 7) en partie haute d'une chambre cylindrique 33 dans laquelle est disposé un tube coaxial 34 ouvert en partie basse et raccordé en partie haute à une autre section de la canalisation 6 dans laquelle est installé le thermo-compresseur 14. Le mélange de vapeur et de gouttelettes d'eau qui arrive en partie haute de la chambre cylindrique 33 décrit un parcours en spirale descendante, les gouttelettes d'eau sont recueillies en partie inférieure de la chambre 33 et sont renvoyées par une conduite 35 à la source chaude, tandis que la vapeur remonte dans le tube coaxial 34 pour parvenir au thermo-compresseur 14.

Fig. 8 illustre une variante de réalisation du séparateur S sous forme d'un séparateur à impact 36 sur un courant sensiblement horizontal du mélange vapeur-gouttelettes d'eau. Le séparateur 36 est composé d'une chambre cylindrique dans laquelle l'arrivée du mélange se trouve en partie basse. Une cloison médiane verticale 37, qui forme une chicane, constitue un séparateur dynamique qui retient les gouttelettes d'eau recueillies en partie basse en forme de trémie conique. L'eau recueillie est dirigée par une conduite 38, et est recyclée dans le cycle thermodynamique. La vapeur s'échappe du séparateur 36 par un autre tronçon de la conduite 6 prévue en partie haute, et qui est équipé du thermo-compresseur 14.

Fig. 9 illustre une variante de réalisation 36a du séparateur à impact de Fig. 8, variante selon laquelle la cloison 37a constitué d'un matériau fibreux perméable ou d'une multitude de déflecteurs formant chicane est inclinée depuis le bord supérieur de la chambre 36a située du côté de l'entrée du mélange vapeur + gouttelettes d'eau, vers le bord opposé inférieur. L'écoulement du mélange vapeur-gouttelettes d'eau est sensiblement vertical au niveau de sa rencontre avec l'écran 37a.

L'invention présente de nombreux avantages.

Le thermo-compresseur 14 combiné avec le condenseur ou échangeur de chaleur secondaire 21 permet de valoriser tout ou partie de la chaleur latente de condensation de la vapeur à l'échappement 5 de la turbine 3 et de transférer cette chaleur sur un circuit hydraulique 23 à moyenne température. Ceci est réalisé en évitant d'augmenter la pression de la vapeur sous vide en sortie 5 de la turbine 3 et en limitant le débit de vapeur soutirée, pour alimenter l'éjecteur 16, de manière à ne pas dégrader la production d'électricité.

Le potentiel de récupération de chaleur d'un hydrocondenseur primaire par rapport à l'énergie entrant dans le système est variable selon le rendement du cycle thermodynamique de la centrale de production électrique.

La chaleur "fatale" qui s'échappe à la sortie d'une turbine à vapeur varie dans une fourchette de 40 % à 55 % de l'énergie produite par la combustion du combustible (déchets, biomasse, énergie fossile). Plus le rendement du cycle est élevé, plus la température de la vapeur en sortie est faible et inversement.

De ce fait, les centrales thermiques à haut rendement produisent une chaleur "fatale" à un niveau de température relativement bas, de l'ordre de 30°C, qui est difficile et coûteuse à utiliser sur des équipements de chauffage traditionnels.

Les unités de valorisation d'énergie par incinération de déchets EfW présentent, par conception, une température de vapeur en sortie de turbine plus élevée de 45°C à 60°C qui est plus facilement utilisable par des consommateurs de chaleur proches.

Malheureusement, la température de la vapeur en sortie de la turbine est assujettie aux conditions climatiques, de sorte qu'en hiver la température de la vapeur en sortie de la turbine est souvent trop basse pour être utilisée directement par des moyens de chauffage conventionnels, ce qui nécessite d'augmenter le niveau de température de manière coûteuse.

L'invention permet, avec le thermo-compresseur 14, de relever la température d'une partie de la vapeur indépendamment des conditions climatiques. Le débit de vapeur de compression délivré par l'éjecteur 16 est ajusté en permanence de manière à limiter le débit de vapeur soutirée sur la turbine.

Il convient en outre de noter que la vapeur moyenne pression qui alimente l'éjecteur 16 a déjà produit une force motrice par détente partielle dans la turbine 3.

Un avantage indirect du détournement d'une fraction du débit de vapeur sous vide en sortie de la turbine consiste dans la réduction de la consommation d'électricité des aérocondenseurs 7 dont la puissance électrique est élevée.

L'impact énergétique, économique et environnemental de l'utilisation de la ressource de chaleur "fatale" perdue au niveau du condenseur par les unités de production d'électricité est potentiellement important.

### Applications

L'invention peut être appliquée à la rehausse de la pression et de la température de la vapeur sous vide prélevée en sortie d'une turbine à condensation dans le but d'utiliser la chaleur latente de la vapeur pour alimenter un circuit d'eau chaude pour le chauffage résidentiel, ou le maraîchage, ou l'horticulture, ou la pisciculture et autres activités nécessitant un circuit d'eau chaude à basse température, notamment de l'ordre de 60°C à 70°C.

L'invention peut également trouver des applications thermiques industrielles pour le chauffage d'un circuit d'eau chaude utilisé pour le séchage de boues, de composts, de déchets, de bois ou autres matières et matériaux.

L'invention peut également servir pour fournir une chaleur d'appoint pour le préchauffage de fluides, d'eau ou d'air de combustion, ou pour la production de froid à partir de groupes frigorifiques à adsorption (LiBr) alimentés en eau à 60°C-80°C.

L'invention trouve de nombreuses applications pour la récupération de chaleur dans les activités thermodynamiques : centrales thermiques, centrales EfW, industries chimiques.

Un exemple d'application est donné ci-après.

Cet exemple concerne le cas où la température extérieure est de 6°C. Dans ce scénario, une fraction de la vapeur est comprimée à la pression requise, c'est-à-dire 0,17 bara (bar absolu), avec utilisation d'un prélèvement de vapeur moyenne pression à 5 bars absolus avant d'être admise à un hydrocondenseur. Dans le même temps, la charge de vapeur admise à l'aérocondenseur est diminuée et une pression de vapeur sous vide plus faible peut être atteinte, typiquement 0,1 bar absolu.

En supposant que l'installation est destinée au chauffage d'une serre d'une surface de 25 ha (25 hectares), c'est-à-dire qu'une énergie de 10.8 MWth (mégawattheures) est exigée (0.433 MWth/ha à 6°C externe), le débit de vapeur moyenne pression à 5 bars absolus vers le thermo-compresseur sera de 6,9 th qui résulte en une production de puissance de 25 348 kWe (kW électriques). Cette puissance est de 0.8 % plus élevée que sans la thermo-compression, pour la même température extérieure, c'est-à-dire à une pression de vide = 0.17 bara (c'est-à-dire 25 149 kWe).

Ceci signifie qu'en supposant une surface de serre de 25 ha, l'effet défavorable sur la production d'énergie du soutirage de vapeur à 5 bars absolus vers le thermo-compresseur est surmonté et dépassé par l'augmentation de puissance résultant de la pression de vide plus basse atteinte. La thermo-compression est bénéfique pour le chauffage d'une serre dont la surface est inférieure à 25 ha, de préférence inférieure ou égale à 20 ha (20 hectares).

Selon l'invention, avec une utilisation de la chaleur externe, la thermo-compression permet de récupérer et de valoriser potentiellement une quantité de chaleur importante à un niveau de température indépendant de celui du cycle eau-vapeur de l'installation. Cette chaleur peut être utilisée pour un usage externe: réseau de chaleur urbain, séchage de boues ou autre biomasse, ou interne préchauffage de l'air de combustion de la chaudière.

L'invention concerne une application en cogénération avec une exportation de chaleur pour un usage externe par un fluide auxiliaire, généralement un liquide, en particulier de l'eau, mais qui pourrait être un gaz, en particulier de l'air.

La vapeur sous vide est prélevée généralement en amont du condenseur principal 7 et un second condenseur 21 installé en parallèle du premier reçoit la vapeur comprimée qui cède sa chaleur latente à un fluide auxiliaire, externe au cycle thermodynamique, d'un circuit externe 23.

La totalité de la vapeur sous vide en sortie de la turbine peut être ainsi récupérée et valorisée à une pression et une température d'utilisation adéquates, indépendamment du cycle thermodynamique ; de ce fait le débit de vapeur qui alimente le condenseur principal 7 peut devenir quasi nul et, dans ce cas, la totalité de l'énergie sous forme de vapeur produite par la chaudière peut être valorisée.

La performance énergétique d'une turbine à condensation équipée selon l'invention est maximale, car même avec un débit de vapeur moyenne pression soutiré très important, on peut toujours utiliser le débit minimal de vapeur de balayage des étages basse pression (en général 15% du débit entrant)

La quantité de chaleur produite et exportée peut atteindre 50% de la chaleur du combustible et sa valorisation énergétique est bien supérieure à la simple augmentation de rendement du cycle thermodynamique

## Revendications

1. Procédé de cogénération selon lequel une source chaude (1) produit de la vapeur d'eau qui est détendue dans au moins une turbine (3) dont la sortie de vapeur à basse pression est reliée à un condenseur (7), une fraction (Q) au moins de la vapeur basse pression sortant de la turbine (3) est dirigée vers un thermo-compresseur à venturi (14) dans lequel de la vapeur d'eau, prélevée sur un étage intermédiaire de la turbine, à pression et température plus élevées que celles de la vapeur basse pression est injectée au voisinage du col du venturi pour donner un fluide résultant dont la pression et la température sont supérieures à celles de la vapeur basse pression sortant de la turbine, ce fluide résultant étant dirigé vers un second condenseur (21),
**caractérisé en ce que** le second condenseur (21) est traversé par un fluide auxiliaire d'un circuit (23) externe au cycle thermodynamique de la turbine, et que tout ou partie de la chaleur latente de condensation de la vapeur, à l'échappement de la turbine, est transféré au circuit externe (23).

2. Procédé selon la revendication 1, **caractérisé en ce que** le fluide auxiliaire est constitué par de l'eau de chauffage de bâtiments ou de serres maraîchères.

3. Procédé selon la revendication 1 ou 2, **caractérisé en ce que** la vapeur d'eau prélevée sur l'étage intermédiaire de la turbine et injectée dans le thermo-compresseur (14) est à une pression voisine de 5 bars.

4. Procédé selon la revendication 1 ou 2, **caractérisé en ce que** la vapeur d'eau moyenne pression prélevée sur l'étage intermédiaire de la turbine est à une pression adaptée selon le taux de compression nécessaire

5. Procédé selon l'une quelconque des revendications précédentes, **caractérisé en ce que** la pression de vapeur d'eau en sortie (5) de la turbine est comprise entre 100 et 240 mbar (température entre 46°C et 64°C) et celle à la sortie du thermo-compresseur (14) est comprise entre 200 mbar et 500 mbar (température entre 60°C et 81 °C).

6. Installation de cogénération pour la mise en oeuvre d'un procédé selon l'une quelconque des revendications précédentes, comportant une source chaude (1) produisant de la vapeur d'eau qui est détendue dans au moins une turbine (3) dont la sortie est reliée à un condenseur (7), et comportant au moins un thermo-compresseur à venturi (14), des moyens (18, 30) pour diriger une fraction au moins de la vapeur à basse pression sortant de la turbine vers le thermo-compresseur, et des moyens (16,17) pour injecter dans le thermo-compresseur de la vapeur à température et pression plus élevées que celles de la vapeur sortante, pour donner un fluide résultant dont la pression et la température sont supérieures à celles de la vapeur sortant de la turbine, et un second condenseur (21) vers lequel ce fluide résultant est dirigé,
**caractérisée en ce qu'**elle comprend un circuit externe (23) pour un fluide auxiliaire, et le second condenseur (21) est traversé par le fluide auxiliaire, pour que tout ou partie de la chaleur latente de condensation de la vapeur, à l'échappement de la turbine, soit transféré au circuit externe (23).

7. Installation selon la revendication 6, **caractérisée en ce que** le circuit externe (23) est constitué par un réseau d'eau chaude à moyenne température, notamment pour le chauffage de bâtiments ou de serres maraîchères.

8. Installation selon la revendication 6 ou 7, **caractérisée en ce qu'**elle comporte une dérivation (18) sur la conduite de sortie (6) de la turbine, le thermo-compresseur à venturi (14) étant installé sur cette dérivation, en amont du premier condenseur (7).

9. Installation selon la revendication 6 ou 7, caractérisée ce qu'elle comporte plusieurs dérivations (18.1, 18.2, 18.3) en parallèle sur la conduite de sortie (6) de la turbine, un thermo-compresseur à venturi (14.1, 14.2, 14.3) étant installé sur chaque dérivation, en amont du premier condenseur (7).

10. Installation selon la revendication 6, caractérisée ce qu'elle comporte plusieurs thermo-compresseurs à venturi (14.1, 14.2) installés en série, les uns à la suite des autres.

11. Installation selon l'une quelconque des revendications précédentes, caractérisée ce qu'elle comporte un séparateur de gouttelettes d'eau (S) pour les éliminer de la vapeur avant entrée dans le thermo-compresseur.

12. Installation selon l'une quelconque des revendications 6 à 11, caractérisée ce que la pression de sortie de la turbine est comprise entre 100 et 240 mbar (température entre 46°C et 64°C) et celle à la sortie du thermo-compresseur est comprise entre 200 mbar et 500 mbar (température entre 60°C et 81 °C), la vapeur moyenne pression de la turbine étant d'environ 5 bars.

## Patentansprüche

1. Kraft-Wärme-Kopplungsverfahren, bei welchem eine Wärmequelle (1) Wasserdampf erzeugt, welcher in mindestens einer Turbine (3), deren Niederdruckdampfausgang mit einem Kondensator (7) verbunden ist, entspannt wird, wobei zumindest ein Teil (Q) des die Turbine (3) verlassenden Niederdruckdampfs zu einem Venturi-Thermokompressor (14) geleitet wird, in welchem in einer Zwischenstufe der Turbine abgenommener Wasserdampf, dessen Druck und Temperatur höher als diejenigen des Niederdruckdampfs sind, nahe dem Hals der Venturidüse eingespritzt wird, um ein resultierendes Fluid zu erhalten, dessen Druck und Temperatur höher als diejenigen des aus der Turbine austretenden Niederdruckdampfs sind, wobei das resultierende Fluid zu einem zweiten Kondensator (21) geleitet wird,
**dadurch gekennzeichnet, dass** der zweite Kondensator (21) von einem Hilfsfluid eines außerhalb des thermodynamischen Kreisprozesses der Turbine befindlichen Kreislaufs (23) durchströmt wird, und dass die gesamte oder ein Teil der latenten Dampfkondensationswärme am Auslass der Turbine in den externen Kreislauf (23) übertragen wird.

2. Verfahren nach Anspruch 1, **dadurch gekennzeichnet, dass** das Hilfsfluid durch Wasser zum Beheizen von Gebäuden oder Gewächshäusern gebildet ist.

3. Verfahren nach Anspruch 1 oder 2, **dadurch gekennzeichnet, dass** der in einer Zwischenstufe der Turbine entnommene und in den Thermokompressor (14) eingespritzte Wasserdampf einen Druck nahe 5 bar aufweist.

4. Verfahren nach Anspruch 1 oder 2, **dadurch gekennzeichnet, dass** der mittlere Druck des in einer Zwischenstufe der Turbine entnommenen Wasserdampfs einen an den erforderlichen Kompressionsgrad angepassten Druck aufweist.

5. Verfahren nach einem der vorhergehenden Ansprüche, **dadurch gekennzeichnet, dass** der Druck des Wasserdampfs am Ausgang (5) der Turbine zwischen 100 und 240 mbar (Temperatur zwischen 46°C und 64°C) beträgt, und derjenige am Ausgang des Thermokompressors (14) zwischen 200 mbar und 500 mbar (Temperatur zwischen 60°C und 81°C) beträgt.

6. Kraft-Wärme-Kopplungsanlage zur Durchführung eines Verfahrens nach einem der vorhergehenden Ansprüche, mit einer Wärmequelle (1), welche Wasserdampf erzeugt, der in mindestens einer Turbine (3), deren Ausgang mit einem Kondensator (7) verbunden ist, entspannt wird, und mit mindestens einem Venturi-Thermokompressor (14), Einrichtungen (18, 30) zum Leiten zumindest eines Teils des die Turbine verlassenden Niederdruckdampfs zu dem Thermokompressor, und Einrichtungen (16, 17) zum Einspritzen von Dampf, dessen Temperatur und Druck höher als diejenigen des austretenden Dampfs sind, in den Thermokompressor, um ein resultierendes Fluid zu erhalten, dessen Druck und Temperatur höher als diejenigen des die Turbine verlassenden Dampfs sind, und einem zweiten Kondensator (21), zu welchem das resultierende Fluid geleitet wird,
**dadurch gekennzeichnet, dass** sie einen externen Kreislauf (23) für ein Hilfsfluid aufweist, und dass der zweite Kondensator (21) von dem Hilfsfluid durchströmt ist, so dass die gesamte oder ein Teil der latenten Dampfkondensationswärme am Auslass der Turbine in den externen Kreislauf (23) übertragen wird.

7. Anlage nach Anspruch 6, **dadurch gekennzeichnet, dass** der externe Kreislauf (23) durch ein Warmwassernetz mittlerer Temperatur, insbesondere zum Heizen von Gebäuden oder Gewächshäusern, gebildet ist.

8. Anlage nach Anspruch 6 oder 7, **dadurch gekennzeichnet, dass** sie einen Abzweig (18) von der Ausgangsleitung (6) der Turbine aufweist, wobei der Venturi-Thermokompressor (14) in diesem Abzweig stromaufwärts des ersten Kondensators (7) angeordnet ist.

9. Anlage nach Anspruch 6 oder 7, **dadurch gekennzeichnet, dass** sie mehrere parallele Abzweige (18.1, 18.2, 18.3) von der Ausgangsleitung (6) der Turbine aufweist, wobei ein Venturi-Thermokompressor (14.1, 14.2, 14.3) in jedem Abzweig stromaufwärts des ersten Kondensators (7) angeordnet ist.

10. Anlage nach Anspruch 6, **dadurch gekennzeichnet, dass** sie mehrere nacheinander in Reihe angeordnete Venturi-Kompressoren (14.1, 14.2) aufweist.

11. Anlage nach einem der vorhergehenden Ansprüche, **dadurch gekennzeichnet, dass** sie einen Wassertröpfchenabscheider (S) aufweist, um diese vor dem Eintreten in den Thermokompressor aus dem Dampf zu entfernen.

12. Anlage nach einem der Ansprüche 6 bis 11, **dadurch gekennzeichnet, dass** der Druck des Wasserdampfs am Ausgang der Turbine zwischen 100 und 240 mbar (Temperatur zwischen 46°C und 64°C) beträgt, und derjenige am Ausgang des Thermokompressors (14) zwischen 200 mbar und 500 mbar (Temperatur zwischen 60°C und 81°C) beträgt, wobei der mittlere Dampfdruck der Turbine ungefähr 5 bar beträgt.

## Claims

1. A cogeneration method whereby a hot source (1) produces steam which is expanded through at least one turbine (3) the low-pressure steam outlet of which is connected to a condenser (7), at least a fraction (Q) of the low-pressure steam leaving the turbine (3) is directed toward a venturi-effet thermocompressor (14) in which the steam, tapped from an intermediate stage of the turbine, at a temperature and pressure that are higher than those of the low-pressure steam, is injected near the throat of the venturi in order to yield a resultant fluid the pressure and temperature of which are higher than those of the low-pressure steam leaving the turbine, this resultant fluid being directed toward a second condenser (21), **characterized in that** the second condenser (21) has passing through it an auxiliary fluid from a circuit (23) external to the thermodynamic cycle of the turbine and **in that** all or some of the latent heat of condensation of the steam, on the exhaust side of the turbine, is transferred to the external circuit (23).

2. The method as claimed in claim 1, **characterized in that** the auxiliary fluid consists of water for heating buildings or market-garden greenhouses.

3. The method as claimed in claim 1 or 2, **characterized in that** the steam tapped from the intermediate stage of the turbine and injected into the thermocompressor (14) is at a pressure of around 5 bar.

4. The method as claimed in claim 1 or 2, **characterized in that** the medium-pressure steam tapped from the intermediate stage of the turbine is at a pressure suited to the necessary compression ratio.

5. The method as claimed in any one of the preceding claims, **characterized in that** the steam pressure on the outlet side (5) of the turbine is comprised between 100 and 240 mbar (temperature between 46°C and 64°C) and that on the outlet side of the thermocompressor (14) is comprised between 200 mbar and 500 mbar (temperature between 60°C and 81°C).

6. A cogeneration plant for implementing a method as claimed in any one of the preceding claims, comprising a hot source (1) producing steam which is expanded through at least one turbine (3) the outlet of which is connected to a condenser (7), and comprising at least one venturi-effect thermocompressor (14), means (18, 30) for directing at least a fraction of the low-pressure steam leaving the turbine toward the thermocompressor, and means (16, 17) for injecting into the thermocompressor steam at a temperature and pressure that are higher than those of the steam leaving so as to yield a resultant fluid the pressure and temperature of which are higher than those of the steam leaving the turbine, and a second condenser (21) toward which this resultant fluid is directed,
**characterized in that** it comprises an external circuit (23) for an auxiliary fluid, and the second condenser (21) has passing through it the auxiliary fluid so that all or some of the latent heat of condensation of the steam, on the exhaust side of the turbine, is transferred to the external circuit (23).

7. The plant as claimed in claim 6, **characterized in that** the external circuit (23) consists of a medium-temperature hot water network, notably for heating buildings or market-garden greenhouses.

8. The plant as claimed in claim 6 or 7, **characterized in that** it comprises a branch (18) branching off from the turbine outlet pipe (6), the venturi-effect thermocompressor (14) being installed on this branch-off, upstream of the first condenser (7).

9. The plant as claimed in claim 6 or 7, **characterized in that** it comprises several branches (18.1, 18.2, 18.3) in parallel branching off from the turbine outlet pipe (6), a venturi-effect thermocompressor (14.1, 14.2, 14.3) being installed on each branch-off, upstream of the first condenser (7).

10. The plant as claimed in claim 6, **characterized in that** it comprises several venturi-effect thermo-compressors (14.1, 14.2) installed in series, one after another.

11. The plant as claimed in any one of the preceding claims, **characterized in that** it comprises a water droplet separator (S) for eliminating water droplets from the steam prior to entry into the thermocompressor.

12. The plant as claimed in any one of claims 6 to 11, **characterized in that** the outlet pressure of the turbine is comprised between 100 and 240 mbar (temperature between 46°C and 64°C) and that on the outlet side of the thermocompressor is comprised between 200 mbar and 500 mbar (temperature between 60°C and 81°C), the medium-pressure steam of the turbine being around 5 bar.
